(19) Europäisches Patentamt
European Patent Office
Office européen des brevets

(11) **EP 1 955 013 B1**

(12) **EUROPEAN PATENT SPECIFICATION**

(45) Date of publication and mention
of the grant of the patent:
**10.10.2018 Bulletin 2018/41**

(21) Application number: **05817548.0**

(22) Date of filing: **02.12.2005**

(51) Int Cl.:
*G01B 21/20* (2006.01)        *E03B 7/07* (2006.01)
*E02D 1/08* (2006.01)         *E21B 47/022* (2012.01)
*G01B 11/00* (2006.01)        *G01B 11/14* (2006.01)
*G01B 11/245* (2006.01)       *G01B 21/00* (2006.01)
*G01B 21/16* (2006.01)        *G01V 1/28* (2006.01)
*G01V 3/38* (2006.01)

(86) International application number:
**PCT/CA2005/001832**

(87) International publication number:
**WO 2007/062496 (07.06.2007 Gazette 2007/23)**

(54) **SHAPE-ACCELERATION MEASUREMENT DEVICE AND METHOD**

MESSEINRICHTUNG für FORM UND BESCHLEUNIGUNG, UND ENTSPRECHENDES VERFAHREN

DISPOSITIF ET METHODE DE MESURE D'ACCELERATION ET DE FORME

(84) Designated Contracting States:
**DE FR GB**

(43) Date of publication of application:
**13.08.2008 Bulletin 2008/33**

(73) Proprietor: **059312 N.B. Inc.
Fredricton NB E3C 1M7 (CA)**

(72) Inventors:
• **DANISCH, Lee A.
Fredericton, New Brunswick E3C 1M7 (CA)**
• **LOWERY-SIMPSON, Murray S.
Hanwell, New Brunswick E3E 2E5 (CA)**
• **ABDOUN, Tarek H.
Niskayuna, New York 12309 (US)**

(74) Representative: **Pfenning, Meinig & Partner mbB
Patent- und Rechtsanwälte
Joachimsthaler Straße 10-12
10719 Berlin (DE)**

(56) References cited:
**EP-B- 0 702 780         US-A- 5 040 154
US-A- 5 097 252          US-A- 6 127 672
US-A- 6 127 672          US-A1- 2002 088 931
US-A1- 2003 222 635      US-B1- 6 184 680
US-B1- 6 184 680**

EP 1 955 013 B1

## Description

FIELD OF THE INVENTION

The present invention relates to a sensor array for measurement. More particularly, the present invention is directed to a method and apparatus for sensing the shape and acceleration of objects and pathways.

BACKGROUND OF THE INVENTION

The shape of an object can be described by one or more paths along or through the object, the paths containing points at defined spacings along the paths, and lines connecting the points having known orientations. In some cases it is also useful to define the orientation of a surface or rigid volume located at each point, for example to define the surface normal at a point along the path.

This invention teaches path measurement based on sensing field strength in a calibrated way within a system of constrained geometry. Additional teachings relate to the improvement of path measurements made by inertial or other sensors, by using the invention.

The present invention is defined by a system comprising the features of claim 1 and a method, comprising the features of claim 17. Preferred embodiments of this system and this method, respectively, are represented in the dependent claims.

It is well known in the fields of Geology and Earth Science to use tilt sensors to measure the paths of boreholes. Typically, a tilt sensor is a tubular form containing electrolytic, resistive, capacitive, "zero-displacement", or micromachined silicon gravity sensors arranged to sense two degrees of freedom (DOFs) of tilt relative to the gravity field. Normally the two DOFs are orthogonal, and are termed x and y components of tilt. The tilt sensor may be lowered into a borehole and tilt data taken at intervals. Or, several tilt sensors may be arranged one above the other in the borehole and used to detect changes in tilt at known locations. It is also known to use accelerometers lowered into boreholes to measure earthquake vibrations, Including s-waves and p-waves. S-waves produce accelerations predominantly parallel to the Earth's surface. It is also known to use magnetic sensors to determine the orientation of sensors in the Earth's magnetic field, including sensors in boreholes. It is also known to measure orientation by inertial means, whereby angular position is inferred from a time integration of angular rate.

In addition to boreholes, the above methods are applied to structures such as bridges and buildings, mineshafts, and sensors attached to or buried in the earth or earthworks.

A deficiency of the above methods is the lack of a calibrated array with intrinsic geometric constraints that would permit a generalized method of measuring 3D shape along paths. A further deficiency is the inability to measure shape within a broad range of dynamic conditions, in real time, or to measure rapid changes in shape, or to simultaneously measure shape and vibration.

A further deficiency is the lack of a calibrated, deformable, portable substrate to hold the sensors and protect them from water and mechanical forces. A further deficiency is the requirement for a larger number of sensors because the tilt sensors are not arranged within a calibrated structure or a twist-free structure, so that magnetic or inertial measurement of orientation about the gravity vector is required, or a special borehole casing is required. Most of the current tilt sensor technologies do not measure dynamic acceleration such as s-waves during an earthquake.

It is also known to use bend-sensing and bend-and-twist-sensing arrays to measure the dynamic and static shapes of boreholes, buildings, persons, instruments, and geological structures. Examples include "Fiber optic bending and position sensor including a light emission surface formed on a portion of a light guide," Danisch, L.A., U.S. Patent 5,321,257, June 14, 1994; "Fiber optic bending and position sensor with selected curved light emission surfaces," Danisch, L.A., U.S. Patent 5,633,494, May 27, 1997; "Fiber optic bending and position sensor," Danisch, L.A., European Patent No. EP 0 702 780, October 22, 1997; 'Topological and motion measuring tool," Danisch, L.A.,U.S. Patent 6,127,672, October 3, 2000; and "Topological and motion measuring tool (11)", Danisch, L.A., U.S. Patent 6,563,107. Arrays of this type shall be referred to in this document as "curvature-sensing arrays".

In Danisch '672, is described a two-DOF bend-sensing array that can be used to map a path in 3D. By adding twist as a third DOF (see Danisch, L.A., '107) the sensors in the array may be allowed to rotate at joints or continuously along the long axis. Danisch, L.A. '107 describes surface-mapping arrays using curvature sensors to measure angles between elements of the surfaces. These sensor arrays use curvature sensors to measure angles along deformable surfaces. Often the sensors are modified optical fibers. Further, the sensors which are taught in these references are positioned or mounted on a flexible substrate.

A deficiency of 2DOF bend-sensing arrays or 3DOF bend-twist-sensing arrays in their most common form is their inability to measure accurately the small angles encountered in many applications including borehole measurements.. Although they can resolve small angles over a short time period, drift causes inaccuracies that are problematic for long-term measurement. Inaccuracy may be surmounted by using 2DOF and 3DOF couplings between stiff members, and measuring the DOFs of the couplings with highly accurate encoders. However, this leads to great cost and complexity that makes it unlikely they would be used for long-term measurement of deformations.

To the prior art describing "curvature-sensing arrays" may be added Mikheev, Sergei M., et al., "Method of monitoring the state of extended shell," US Patent 5,040,154, Aug. 13, 1991; Jacobsen, Stephen C., "Movement actuator/sensor systems," US Patent Application 2003/0222635, Dec. 4, 2003; and Harvill, Young et al., "Motion sensor which produces an asymmetrical signal in response to symmetrical movement," US Patent 5,097,252, Mar. 17, 1992. Note that not all of the above are arrays; rather, some of the sensors may act alone as a single sensor. Examples include Danisch '257, Danisch '494, Jacobsen '635, and Harvill '252. The devices described in Danisch '780, Danisch '107, and Mikheev '154 require multiple sensor zones, each producing independent data, to produce 3D results. In the case of Mikheev '154, the zones may all be along the same field-carrying conduit, but they are still distinct zones (e.g. '154, col. 4, lines 45-53).

In contrast to the above, the present invention requires at least two rigid bodies, each with its own set of sensors, to measure the orientation of one rigid body with respect to the next, along a path. Because the measurements are made relative to an external field with field strength and orientation known in the World Coordinate System (WCS), the orientation of each rigid body is known in the WCS and the orientation of one rigid body, with respect to the other is also known. The measurand, defined as "that which is measured," includes the orientation of rigid bodies in an external field, and the orientational interrelation of the rigid bodies, which can be described also as the "difference" in angles between rigid bodies. It is the interrelational property that, combined with the known lengths and spacings of the rigid bodies, defines the shape. Other than the external field, the present invention is self-contained.

The most important distinction of the present invention over the prior art is that of the external field, which is used as a reference in the present invention. This has the important effect of making the sensed orientation data of each rigid body independent from that of other rigid bodies in the system. When the orientational interrelation between rigid bodies is calculated, it is based on data known directly from sensing the external field, which is in turn known in the WCS. Another important distinction is that in order to reduce the number of degrees of freedom required to be sensed (and thus reduce the number of sensors required), the rigid bodies are constrained to operate such that the sensors do not travel through orientations that cannot be sensed, such as through orientations that are symmetrical about the field vector. Since this constraint can be realized through the construction of the array itself, the array can be a self-contained, calibrated entity.

The curvature-sensing arrays disclosed in the prior art listed above (Danisch '257, '494, '780, '672, '107; Mikheev, '154; and Harvill '252) do not require or include the use of any external field to measure curvature. If curvature is understood to be the limit of angular differences between rigid bodies along a path as the path-length of the rigid bodies approaches zero (the mathematical definition of curvature), then they are methods of measuring the angular relationship between rigid bodies without the use of an external field. They all have internal fields, such as light in fiber optics, or the fields carried along a path by the "extended line of transmission of wave energy positioned and secured along the respective perimeters of the defined elementary portions" (Mikheev, '154, Abstract). However, the measurand is not due to the interaction of the sensors in the field. Instead, the self-contained field is affected by the changes in shape of the path. For instance, the throughput of light travelling through the fibers of Danisch or Harvill is changed by the curvatures applied to a substrate; the energy modes of Mikheev are modulated by curvature of his substrate.

Some of the teachings in Jacobsen '635 use field sensing, such as when a bending filament moves nearer or farther from field-detecting portions of the sensor separate from the filament. In other cases, sensors are on the filament, such as when the filament is fitted with strain gauges. Although orientation is sensed, in some cases in multiple degrees of freedom (as when four strain gauges are used, or a plurality of field detectors is used), the orientation is that of a single filament. Nothing is disclosed about determining orientation along an arbitrary path, such as in Mikheev '154 or Danisch '672 or '107, or in the present disclosure. The references that do calculate an arbitrary path are using curvature sensing, not sensing of an external field.

Thus, the distinction between arrays using curvature sensors and the present invention is the use of an external field. In contrast, a broad field of applications requiring high accuracy and where an external field exists already or can be applied, is made possible by the present invention. The increased accuracy is the most important point of distinction. Any of the arrays of curvature sensors, because they have no external reference except possibly at the beginning or end of the path, are subject to catastrophic errors of shape due to a relatively small error anywhere along the path. A one-degree error at the start of a 100-meter-long substrate with bend sensors, even if there are no other errors along the path, will produce a 1,743 mm, or 1.7 m error at the far end. A 100 m array containing a path of rigid bodies each 100 cm long would experience an error of only 1.7 mm in 100 m if the sensors on one rigid body produced an error of 1 degree in sensing the external field, irrespective of which rigid body had the error. This is a thousand-fold improvement.

In other respects, the arrays using curvature sensors, or the present invention that calculates curvature from measurements of orientations in an external field, are similar. All of these systems require a knowledge of the degrees of freedom that must be sensed to report a 2D or 3D shape, and the best ones minimize that number through constraints. In the case of Danisch '672 the ribbon-like substrates are used because they have only two degrees of freedom: bend and twist, thereby limiting the number of sensors in a sensor locality to two. In Danisch '107 the ropeiike construction can have a third degree of freedom, requiring a third sensor per locale. The measurements of Mikheev '154 require two modes of sensing, but if the shells were stretchable, would require three or more. However, a major distinction is that all of the curvature methods are susceptible to large errors due to a single small error along the path.

In addition to the above, other prior art is directed to sensing changes in fields, such as with magnetoresistive sensors, light meters, RF field strength meters, and the like. These are distinguished from the present invention in that they use a sensor fixed in orientation and position to measure changes in a surrounding or nearby field. An example is Shinoura, Osamu, et al., "Magnetic field sensor with components formed on a flexible substrate," US Patent 6,184,680, Feb. 6, 2001. Shinoura '680 describes magnetic sensor films deposited on flexible substrates that can be curved to enhance their sensing properties. The purpose is not to determine the orientation of the sensor, but to optimally detect movements of nearby gear teeth or other moving objects. The curvature of Shinoura '680 is used in various ways. It can be used to position a portion of the sensor much closer than usual to the moving object, or at various ranges by "tuning" the amount of curvature using the same premanufactured sensor/substrate film. Curvature is also used to change the stress on the film, thereby changing the sensitivity or other properties of the sensor, again without manufacturing different sensor/substrate units for different applications. Various other orientations of multiple sensor plates improve the detection of moving objects by using differential sensing. Differential methods are well known to instrumentation engineers, and shaping of substrates is also known, but Shinoura '680 has been inventive in enabling the sensing of different moving objects by using the same flat substrate, modified by curvature or placement in the final stages of manufacture. Detecting changes in a field as is done by Shinoura '680 requires a mechanically unmoving sensor, an unchanging curvature applied to a sensor substrate, and a field that changes as the measurand. In the present disclosure by Danisch et al., the field is of known orientation and distribution of field strength, and the measurand is the interrelation between rigid bodies of a movable sensor array. In Shinoura '680, by the time any sensing is done, the curvature is already determined and unchanging. In the present disclosure the angular relationship along the substrate is unknown and is to be determined.

Possible confusion between the flexible substrates of Shinoura '680 and flexible substrates holding rigid bodies of the present invention is the purpose to which the flexibility is put. Shinoura '680 uses flexibility to tune the capabilities of the sensor. The present invention is directed to measuring the shape of the flexible substrate or the shape of the array of rigid bodies comprising the sensor array. Another point of possible confusion may be the use of field (magnetic in this case) sensors that have different orientations therebetween. However, this is well known in the art predating both Danisch and Shinoura, as a means of determining the direction of fields or separating field components (See, for instance, Jones, Herbert, "Non-concentricity compensation in position and orientation measurement systems," US Patent 5,307,072, April 26, 1994, wherein are described orthogonal magnetic field-sensing coils for sensing both position and orientation in a field).

Known in the art are inclinometers, tilt meters, and magnetometers. These are a few of. many field sensors known for many decades and can be extremely accurate, especially when used in a very uniform and predictable field like gravity, or to a lesser degree of accuracy, in the earth's magnetic field. For example, one such inclinometer is described in Davis, et al., "Electronic inclinometer," US Patent 5,170,567, Dec. 15, 1992; and one such magnetic field sensor is that of Jones '072 introduced above. The present invention is distinguished from those prior-art methods in that it is a self-contained, calibrated array of such. sensors requiring no other mechanical components to obtain accurate measurements of orientations within a field, and consequently an accurate shape for the array expressed as inter-body orientations, and the overall orientation of the array in the field. The prior art also mentions an array of inclinometers mounted in a borehole and arranged to distinguish X and Y components of tilt by being mounted in tracks formed in the borehole casing. (See for example Patton, Franklin D., et al., "CPI casing," US Patent 4,258,788, March 31, 1981). Such arrays and casing are sold in large numbers by geotechnical equipment supply houses worldwide. The present invention is far superior because it does not require the tracks, can use much smaller casing, and can withstand much larger deformations without becoming stuck in expensive special tracked casing. The sensors measuring inclination in gravity fields are not the special part; the design of the array to enable constraint to two degrees of freedom is.

US 6 095 991 A discloses an ambulatory apparatus for monitoring the position of the body and the extent of motion in each position of the body of a lumen or a lower animal. The apparatus comprises a three-dimensional-position monitoring, mercury sensor, and a control unit for determining the position and related movements with respect to gravity of the measurement site at which the sensor is located.

US 2004/0108854 A1 describes a subsurface imaging cable comprising a plurality of flexible sensor modules being spaced apart on the subsurface imaging cable at a selected distance, and a flexible medium connecting the plurality of the sensor modules. The subsurface imaging cable is flexible and is adapted to be wound on a reel.

US 2002/0012014 A1 relates to an operation input apparatus comprising a posture sensor attached to a finger, and a command generator for generating a command based on an output of the posture sensor. The posture sensor is attached to all of a first link portion, second link portion and third link portion of at least one finger.

The present invention is also distinguished over the prior art by the provision of flexibility between rigid bodies holding sensors, in a constrained fashion that limits, without use of external devices, the motions of the rigid bodies to those which can be measured with a minimum number of field sensors in an array, producing 3D data from sensors able to measure only two degrees of freedom. Although the principle of constraint of motion is used in prior art including Danisch '672 and '107, that prior art does not teach its use in field sensing, nor did it anticipate the difficulties of handling null directions in fields, whereby the sensors report no change if re-oriented about a field vector, for example about the vertical if gravity is the field. Although the field sensing limits the orientations possible for each sensor to those producing a change in measurement for a change in orientation, the field of possible uses is still very broad and the increased accuracy and ease of use very compelling.

The present disclosure teaches the steps required to move from a much-less-accurate curvature sensing array to an accurate field sensing array, using constraints that involve both the substrate and its orientation in the field.

The present disclosure also teaches means of using field sensing and non-field sensing (including curvature sensing and angular rate sensing) so that the high accuracy of field sensing can be accomplished with fewer constraints on the mechanical connections between rigid bodies, and on the orientation of the array in a field.

In the descriptions below, curvature sensors are sensors not using an external field for their operation, for example curvature sensors as described by Danisch '257, '494, '780, '672, '107; Mikheev, '154; and Harvill '252.

We disclose herein a calibrated combination of sensors, and measurement and calibration methods, that allows accurate measurement of both static and dynamic shapes of deformation and acceleration in a single system that is optimized for field installation at low cost. It will be shown that by measuring and differentiating angles within a field it is possible to greatly improve on the accuracy of prior art methods. Further, packaging techniques are disclosed that combine measurement, shielding, and sealing functions, leading to low-cost, portable integrated measurement tools.

In Danisch '672 and Danisch '107 surfaces are measured relative to a reference surface in 6DOF by knowing the angular relationships between elements of the surfaces. The absolute angles of the elements in the "world" coordinate system (WCS) are not measured directly. They are calculated by integrating the angular relationships, or "local" angles between elements, which are measured by bend sensors. For instance, rods connected by hinges bent all in the same vertical plane might have local hinge angles of 10, 20, -10, and 30 degrees. Relative to a reference rod that is horizontal in the world coordinate system, the WCS angles between rods are 10, 30, 20, and 50 degrees, obtained by integrating (adding) the local angles along the path. If the lengths of the rods are known, and their WCS angles have been determined, then the path of the rod system is completely determined. Herein, we use WCS or "absolute" to refer to angles measured in a coordinate system that does not move within a region of interest. Such a coordinate system need not be that of the earth, but could contain that of the earth, e.g. it could be attached to the sun or to any reference location. Further, we use "local angles" or "interbody orientation(s)" herein interchangeably to denote the angular relationship between one rigid body and another. In general, the angular relationship between two rigid bodies (i.e. "local angles", or "interbody orientation(s)"), may be described by standard mathematical means including Euler angles (roll, pitch, and yaw), by an orientation matrix or transform, or by quaternions. It is also understood that bend and twist between two rigid bodies are local angles or interbody orientations and can be thought of as Euler angles.

When the connections between the rods allow for additional DOFs, such as multiaxial bend and twist, then there are 2 or 3 angular DOFs between rods and the integration requires 3D mathematics. 3D space curve mathematics can be used and are described in Danisch '672 and Danisch '107. Deformable surfaces or volumes, not just collections of rods, may be measured in this way if the angular interrelationships are measurable, and the locations of the sensors on the surfaces are known. The measurements are subject to significant errors for all portions of the surface calculated beyond the location of any angular error. Further, drift in the sensors can lead to inaccuracies in shape that must be corrected by putting the surfaces back into a previously captured pose and removing offsets to restore the measured shape to that of the captured pose. However, the measurements are useful because they may be performed with very thin arrays of optical fibers and at very high speed, such as 10,000 frames per second or more for rapidly changing shapes.

For measurement of orientations at intervals along static shapes it is possible to use accelerometers with a frequency response that extends to a constant or 'DC' acceleration, so that outputs are responsive to the gravity field, which has a constant acceleration of approximately 9.8 m/s/s. Accurate, low cost, miniature devices made by micromachining silicon (MEMS or MicroMachined ElectroMechanical Sensors) are available in single and dual axis forms. An example is the Analog Devices Inc. ADXL311 integrated circuit, which has a response to acceleration from DC to thousands of Hertz (Hz). Dual-axis MEMS devices can resolve sub-degree tilts and maintain high accuracy over many years and a wide temperature range. If an array of these is placed on a deformable surface, an array of tilt signals can be generated that represents the WCS angles of the attachment locations. If the distances between locations are known, the path, surface, or volume shape can be determined to high accuracy. Unlike shape measurements based on integration of local angles, shape measurements based on directly-measured WCS angles are not subject to accumulating errors and can be much more accurate. Alternatives to MEMS sensors include electrolytic tilt sensors, capacitive tilt sensors, inductive tilt sensors, and zero-displacement accelerometers that keep a mass centered in a measuring frame and determine the forces necessary to do so. However, the disadvantage of all prior-art tilt-sensing methods is that measurements must be made while the shapes are unchanging, and the sensors are not mounted to a substrate with constrained mechanical movement to form a calibrated array of sensors capable of multi-DOF measurements.

There are also available angular rate sensors made with MEMS technology. Such sensors use a vibrating structure to sense the Coriolis force resulting from angular movements within an inertial frame of reference. An example is the Analog Devices Inc. ADXRS401 Angular Rate Sensor. A single time-integration of angular rate yields an angular position relative to a starting angle. The accuracy of such a single integration is superior to a double integration of acceleration to yield position, because there are fewer constants of integration.

In the above embodiment, measurement of two degrees of freedom of orientation or rate of a rigid body requires the attachment of at least two sensors to the body. Further, in the above embodiment, the axes of maximum sensitivity of the sensors attached to a body must not be aligned (i.e. they cannot be parallel). The sensors on a body may be co-located or not, since all portions of a rigid body have the same orientation regardless of location. Optimally, the sensors should be oriented at 90 degrees to each other. For optimum results, a third sensor attached to the rigid body should be orthogonal to the first two.

Prior-art tilt sensing has required special borehole casings with grooves to hold tilt sensors at known azimuthal relation to the WCS. Tilt sensors are lowered into the boreholes, maintained in constant azimuthal rotation by grooves in the casing, and readings are taken at intervals to infer the shape of the borehole casing. A calibrated array of tilt sensors constrained not to twist, can be used without grooved borehole casing, and need not be lowered at intervals. Methods and apparatus for such a calibrated array will be described herein.

It is desirable in sailboat racing to be able to optimize the shape of sails to maximize speed in given wind and sea conditions, thereby making it desirable to measure and record sail shape. This has been done previously by attempting to image optical targets on the sail from the deck or mast. Problems include bright sunlight, calibration difficulties, and interfering water droplets. Herein will be described a method for measuring sail shape, mast twist, and boom angle using accelerometers mounted to and calibrated on substrates including sails, masts, and booms. Three dimensional measurements of shape and orientation of these substrates can be made with accelerometers alone because the substrates are constrained to two degrees of freedom and the sensors conform in mounting, calibration, and calculation method to the teachings herein.

The methods used for borehole and sail shape measurement can be generalized to measurement of a broad class of geometries, so long as the array of sensors conforms to the teachings of this invention concerning degrees of freedom and range of geometry. Thus, we will show how field-sensors can be used to measure shape of non-vertical paths including near-horizontal paths across unstable slopes, the shapes of chair seats and backs, and how to improve the measurement of human and other shapes by including the teachings of this invention.

If an array is formed of MEMs acceleration sensors with a wide range of frequency response, the sensors will respond to static acceleration fields like gravity and also to rapidly-changing fields like earthquake vibration. The electronics and software may be arranged to provide output data that represent a long-term average of the total signal (slow data), and other output data that represent only the rapidly-changing components (fast data). The slow data represent the response to gravity and the fast data represent the response to vibration or other rapid movement of the array within the gravity field. The slow data are obtained by averaging many frames of data and otherwise excluding rapidly-changing signals using standard filtering techniques. The fast data are obtained by subtracting the slow data from unfiltered total data. This prior-art technique of obtaining slow and fast data is well-known. If the fast data integrate to zero over time in the filter, then accurate slow data representing the mean shape are obtained. If the mean shape is unchanging or changing only very slowly, then the fast data represent the vibration present at each sensor within the array. Thus, the array may be used to obtain static shape from WCS tilt angles (slow data), while the fast data are used to define the vibration applied to the array at each sensor.

It is possible to have a shape changing rapidly, so that accelerations are due to the movements of elements of the array and to changes in orientation relative to the gravity field (tilt changes) at the same time. There may also be an overall vibration field. In these cases the shape and vibration cannot be separated into separate output data sets based on acceleration alone. In an embodiment of the invention, sensors measuring angular rate are used exclusively at these times of dynamic change to determine the changing shape, which requires a single time integration of angular rate. Signals from both angular rate and WCS angle sensors may be used to determine that a transition from static to dynamic shape has occurred. The last known static shape may be used to initiate the dynamic shape measurement with an optimum starting shape.

If only acceleration sensors are present (no angular rate sensors), then static and dynamic shape will in general be unknown during dynamic shape changes. However, the invention provides valid dynamic shape with only accelerometers in the case where a uniform acceleration field is present, even if the field changes in time. Thus, by uniform acceleration field we mean a spatially uniform acceleration field. An example is a vertical array of sensors in a borehole in a homogeneous bed of rock undergoing spatially uniform horizontal earthquake vibration. In this case all of the tilt sensors will be subjected to the same acceleration from the vibration, and constant acceleration from gravity, so it is possible to extract static shape information from the array during the event, as will be described herein.

## SUMMARY OF THE INVENTION

The invention provides an apparatus comprising the features of claim 1, and a method comprising the features of claim 17, which address the above-mentioned issues. The dependent claims further develop the idea of the present invention.

## BRIEF DESCRIPTION OF THE DRAWINGS

Having generally described the present invention herein above, reference will now be made to the accompanying drawings.

Fig. 1      illustrates a fiber optic sensor known in the prior art of local bend;
Fig. 2      illustrates a fiber optic prior art sensor of local bend and twist;
Fig. 3      illustrates a partial schematic view of a cantilever sensor of the present invention as a MEMs accelerometer;
Fig. 4      illustrates a top view schematic of the cantilever sensor of Figure 3;
Fig. 5      illustrates a top view schematic of an alternative embodiment of the present invention having a pair of cantilever sensors forming an orthogonal pair of MEMS accelerometers;
Fig. 6      illustrates another embodiment of the present invention having two rigid bodies having accelerometers and separated by a bendable region having a curvature sensor;
Fig. 7      illustrates a volume of flexible material capable of being bent and twisted and being fitted with a plurality of accelerometers connected by plurality of curvature sensors when in an unflexed state;
Fig. 8      illustrates the volume of flexible material in Figure 7 when in a flexed state;
Fig. 9      illustrates two acceleration-sensing units of Figure 8 showing distances and angular orientation between them;
Fig. 10     illustrates two sets of orthogonal unit vectors and a distance vector therebetween representing orientation and position information, respectively, between the two rigid bodies;
Fig. 11     illustrates a sensor array in a flexible enclosure for vertical measurements using shrinkable tubing;
Fig. 12     illustrates a braid for imparting shielding and torsion resistance;
Fig. 13     illustrates a sensor array in a flexible enclosure clamped from the outside;
Fig. 14     illustrates a sensor array in a flexible enclosure for use in horizontal measurements;
Fig. 15     illustrates a clamp modified to provide registration to a surface;
Fig. 16     illustrates a sensor array on a ribbon-like flexible substrate;
Fig. 17     illustrates the ribbon of Fig. 16 in an oval protective hose;
Fig. 18     illustrates the present invention in use with a sailboat; and,
Fig. 19     illustrates the present invention for use as an endpoint-measuring application.

## DETAILED DESCRIPTION

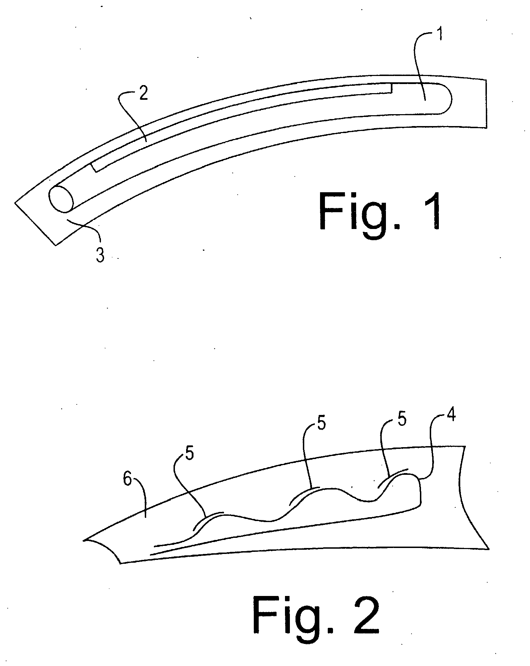

Figure 1 shows a fiber optic sensor capable of sensing bend which is described in detail in Danisch '257. It comprises a Fiber 1 treated to lose light on one side through a loss zone 2, preferably along the entire length over which bend is to be sensed. The optical design is such that bend is integrated along the treated portion of the fiber. The optical intensity transmitted through the fiber is modulated according to the net angular displacement between ends of the treated region, regardless of path. The sensor may be attached to a bendable substrate 3 to sense the bend of the substrate.

Figure 2 shows an extension of the bend-sensing method of Figure 1, which is explained in detail in Danisch '672. An optical fiber 4 has been sinuated along a substrate within a sensing region which is approximately the full length of the sinuations shown. On portions of the fiber 5 approximating a 45 degree orientation to the long axis of the substrate, the fiber is treated to sense curvature, which in this case will include components of bend and twist of the substrate 6. A second fiber on the opposite side of the substrate is sinuated in opposite fashion, so that its approximately 45 degree portions form approximate X shapes with the first fiber. In Danisch '672 is described a method for extracting bend and twist as separate data from the pair of sensors. The bend and twist sensing substrate may be used to sense 2 DOF curvature between two rigid bodies. It is also possible to connect a fiber optic "rope" between two rigid bodies, using methods described in Danisch '107. The rope may be treated to be sensitive to bend in 2DOF or to also sense twist for a total of 3 DOFs. It is possible also to connect two rigid bodies with other bend-sensing technologies including but not limited to conductive rubber, potentiometers, rotary encoders, goniometers, and optical beams impinging on xy arrays.

In general, the above methods of sensing angles between rigid bodies are all means of sensing local angles, which may be sensed in various DOFs, including 1DOF bend, 2DOF bend, 2DOF bend and twist, or twist alone, depending on the application. To refer to all of these in general, we will use the term "curvature" to denote a combination of bend and twist or of either alone.

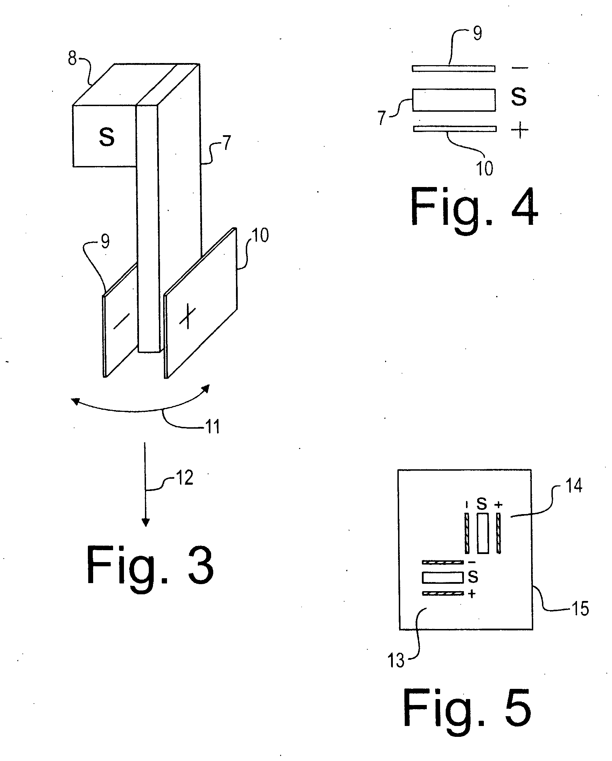

WCS angles may be sensed by MEMs accelerometers introduced earlier in the general description. A MEMs sensor is micromachined in silicon, using semiconductor integrated circuit technology. Figure 3 shows a schematic diagram illustrating the general physical principle of a MEMs accelerometer. The actual construction varies from this description, but the principles are the same. A conductive, bendable cantilever 7 is anchored to a reference frame 8, marked with an "S" in the figure to indicate that a signal will be present there. The reference frame is mechanically attached to the case of the sensor (not shown), but is conductive and carries the charge present on the cantilever. Capacitive fields between two oppositely charged plates 9 and 10 (marked with "-" and "+" respectively) near the cantilever are unbalanced by movement of the cantilever, resulting in a potential at S that indicates proximity to one plate or the other. The cantilever is bent by acceleration in an arc shown by double arrow 11, which results from a gravity field such as indicated by arrow 12 or from changing velocity of the case of the sensor. If the cantilever is vertical as shown, the output signal is at an intermediate level. If the cantilever is tilted so that it approaches the + plate, the signal increases. If it is tilted the other way, the signal decreases. The output s in a gravity field is:

$$s = gain * g * \sin\theta \quad [eq.\ A]$$

where gain is a calibration constant, typically 0.0034, which depends on the mass, material, and dimensions of the cantilever and details of the circuitry, g is the acceleration of gravity (typically 9.8 m/sec/sec), and theta is the angle in radians relative to vertical.

Figure 4 shows a schematic of the same MEMs accelerometer viewed from the top.

Figure 5 shows a top view of two schematic acceleration sensors arranged orthogonally to sense tilt and acceleration in 2 DOFs. Typically, both sensors are in the same case 15, typically a small surface-mountable case a few millimeters on a side.

A cantilever sensor as shown in Figure 3 is maximally sensitive to changes in angle when it is vertical (aligned with the gravity field 12). It has maximum output (positive or negative) when oriented orthogonally to the gravity field, but changes with angle are minimal in this condition. Both effects are consequences of the shape of the sine function, which is steep near zero crossings but with a low slope near maxima and minima.

Positive and negative changes from vertical are distinguished by a cantilever accelerometer, because they increase or decrease the signal respectively from its intermediate vertical state, but angles beyond 90 degrees from vertical cannot be distinguished from angles less than 90 degrees from vertical. Thus, "upside down" is indistinguishable from "right side up", even for an orthogonal pair of sensors. However, if a third orthogonal accelerometer is added to form a triad of sensors, the ambiguity is resolved.

The most general form of the three-axis accelerometer comprises three accelerometers mounted along orthogonal axes. Each reports the field strength of gravity along its axis. The three numbers can be used to calculate the gravity vector with respect to the frame of reference of the accelerometers. Because accelerometers are also inertial sensors, a three-axis accelerometer also reports non-gravitational accelerations along its three axes.

Another example of a field-measuring sensor useful for understanding the invention is the magnetometer, which measures field strength of a magnetic field, usually that of the earth, along one or more axes. A three-axis magnetometer measures field strength along three orthogonal axes, allowing calculation of the magnetic vector with respect to the frame of reference of the magnetometers.

An example of a purely inertial sensor is the angular rate sensor. A three-axis angular rate sensor measures the change in orientation over time along three orthogonal axes, relative to its frame of reference.

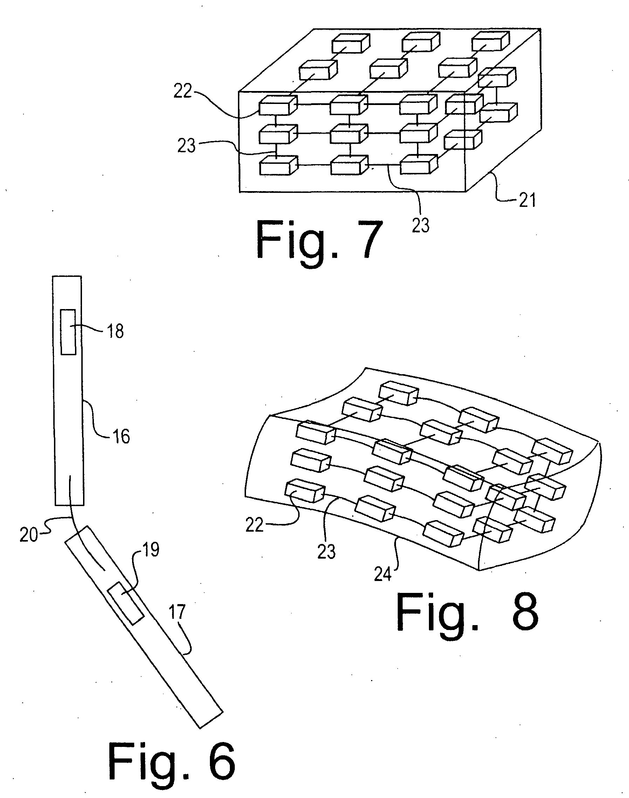

Two rigid bodies 16 and 17 within a flexible body may be fitted with accelerometers, angular rate sensors, and magnetometers to sense WCS angles. This is shown in Figure 6, where the curved line 20 represents mechanical connection allowing bend, bends, and/or twist and the rectangles 18 and 19 represent accelerometers (single, double, or triple) with the optional addition of angular rates sensors and/or magnetometers.

The 3D curve 20 between the rigid bodies can be modelled as a polyline with a total length of the unbent length of the curvature sensor when straight. If only planar bend is present, the net bend may be distributed evenly along the polyline by interpolation, yielding a circular arc. If bend and twist are present, they may be distributed evenly along the polyline, yielding a portion of a helix. Alternatively, spline or other interpolation functions may be used to distribute the bend and twist.

Figure 7 shows a more general placement of local and WCS sensors within a deformable volume 21 such as a rectangular prism made of rubber. Local sensors 23 may extend between WCS sensors 22 in numbers and locations required by the degrees of freedom to be sensed, but are not the subject of this patent. In the figure, some of these sensors have been omitted to simplify the drawing. The WCS sensors may be modelled as small rigid bodies with curvable material in between. Bend and twist of the volume are measured as changes of local and WCS angles. Figure 8 shows the volume in an example of a deformed state. The WCS sensors are tilted and the paths between them are bent and/or twisted. The shape of the deformed volume may be modelled by "path calculation": Polylines are formed along the curves connecting the WCS sensors. A string of sensors connected by bendable elements within a borehole is a subset of the general volume sensor just described. If extension and compression are significant, they may be either sensed by adding compression and extension sensors, or may be calculated if the physical properties of the material, such as its modulus of elasticity, are known.

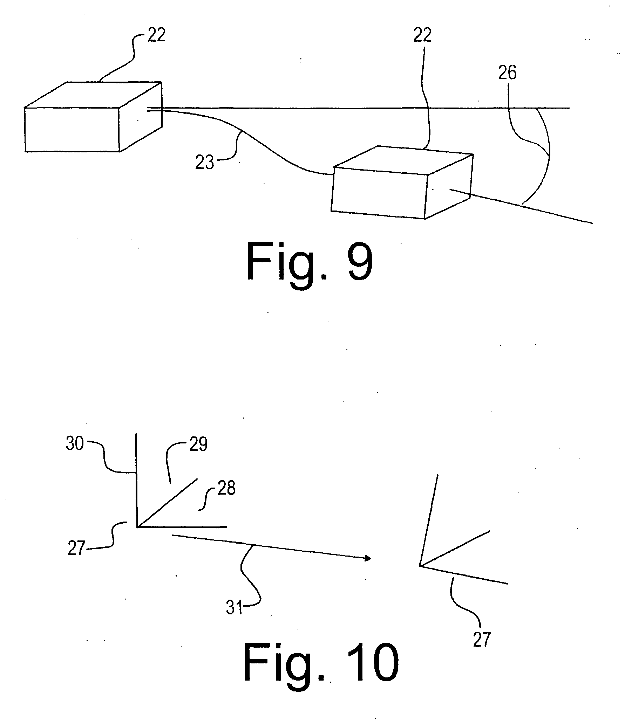

Figure 9 shows two of the WCS sensors 22 in a volume, with a curved path 23 in between. The angle between the two rigid bodies containing the WCS sensors is represented by angle 26. In general, each of the WCS sensors is a rigid body which has a 3 DOF orientation in the WCS, and the difference between the orientations may be described using roll, pitch and yaw numbers. However, because roll, pitch and yaw are subject to indeterminate pole conditions, it is less ambiguous to use orientation vectors, as shown in Figure 10. Each rigid body can be described by a set 27 of three orthogonal unit orientation vectors 28, 29, and 30. The 3D displacement between rigid body centers may be described with a 3D displacement vector 31, or if interpolation is used, by a polyline consisting of multiple 3D displacement vectors. A collection of such measurements for each WCS rigid body in a volume completely describes the shape of the volume. At each rigid body location within the volume, position and orientation are known, typically referred to the WCS as x, y, z displacements and rx, ry, and rz orientations, for a total of 6 DOF. rx, ry, and rz may be expressed as roll, pitch, and yaw, or as a triad of unit orientation vectors (each triad contains nine numbers, three of which are redundant, but the nine represent 3 DOF).

Not all DOFs need be sensed at every sensor location if they are not needed for shapes of interest. Thus, a mechanical system that does not twist does not need twist sensors, or another system may only need a single DOF of bend at each local angle sensor location. Often, orientation in the earth's magnetic field need not be known, or if it is needed, a single magnetic sensor triad at one point along a shape measured by non-magnetic means may be sufficient to orient the shape within the WCS.

Static shape may be determined from WCS information alone by finding the local angle changes of each rigid body. If acceleration sensors are used for determining static shape at different points along a path, the following conditions must exist:

1) Each link in the path must be constrained to have only 1 or 2 known degrees of rotational freedom relative to its preceding link.
2) No rotational degree of freedom can be purely about the gravity vector (i.e. rotations in the horizontal plane are not allowed).
3) Dynamic acceleration present at each sensing location must be either negligible compared to the magnitude of gravity, filterable by averaging, or uniform (i.e. common-mode) along the path.

If the coordinate frames of reference at two adjacent rigid bodies are $R_n$ and $R_{n+1}$, and it is assumed that the orientation of $R_{n+1}$ can be expressed in terms of rotations about the local $x_n$ and $y_n$ axes (in that order), then $R_n$ is related to $R_{n+1}$ by the matrix equation:

$$R_n = \begin{bmatrix} 1 & 0 & 0 \\ 0 & \cos(rx_n) & -\sin(rx_n) \\ 0 & \sin(rx_n) & \cos(rx_n) \end{bmatrix} * \begin{bmatrix} \cos(ry_n) & 0 & \sin(ry_n) \\ 0 & 1 & 0 \\ -\sin(ry_n) & 0 & \cos(ry_n) \end{bmatrix} * R_{n+1}$$

$$= \begin{bmatrix} \cos(ry_n) & 0 & \sin(ry_n) \\ \sin(rx_n)\sin(ry_n) & \cos(rx_n) & -\sin(rx_n)\cos(ry_n) \\ -\cos(rx_n)\sin(ry_n) & \sin(rx_n) & \cos(rx_n)*\cos(ry_n) \end{bmatrix} * R_{n+1}$$

[eq. 1]

where $rx_n$ is the rotation about the local $x_n$-axis and $ry_n$ is the rotation about the local $y_n$-axis at location 'n' that brings $R_n$ inline with $R_{n+1}$. The local angles $rx_n$ and $ry_n$ of each rigid body can then be calculated by comparing the acceleration vectors of consecutive rigid bodies using the matrix relation defined above. Since the acceleration field due to gravity is assumed to be uniform along the path being measured, the local acceleration vectors $a_n$ and $a_{n+1}$ (as measured by the accelerometers at n and n+1) are related as follows:

$$\mathbf{a}_n = \begin{bmatrix} \cos(ry_n) & 0 & \sin(ry_n) \\ \sin(rx_n)\sin(ry_n) & \cos(rx_n) & -\sin(rx_n)\cos(ry_n) \\ -\cos(rx_n)\sin(ry_n) & \sin(rx_n) & \cos(rx_n)*\cos(ry_n) \end{bmatrix} * \mathbf{a}_{n+1} \qquad [\text{eq. } 1.1]$$

The local acceleration vectors are known from the accelerometer outputs. This gives us an equation of the form:

$$A = B*\cos(ry_n) + C*\sin(ry_n),$$

where A, B, and C are known values determined from the accelerometer outputs. In particular A is the x-component of $a_n$, B is the x-component of $a_{n+1}$, and C is the z-component of $a_{n+1}$. In general, it is necessary to use numerical methods to solve this equation. Once $ry_n$ is calculated, $rx_n$ can then be computed in a similar manner.

The local rotations are typically stored in angle or matrix form, and can be combined to determine the shape of the measured substrate.

Note that the above calculation can be performed only under the given constraints (two or fewer degrees of freedom) and no rotations purely about the gravity vector. For magnetic sensing, the same rules apply except that the rotational restriction applies to the magnetic field vector, not the gravity vector. The method can be generalized to any field having a known distribution of field strength, field sensors responsive to orientation within the field, a number of degrees of freedom no greater than the number of measurable orientations, and a constraint of the range of measurement to exclude changes in orientation that yield no change in measured signal.

Herein, it will be shown the invention enables:

    1. use of field-measuring sensors for direct measurement of a shape deformable in two degrees of freedom,

    2. use of field-measuring sensors for correction of two degrees of freedom of orientation data obtained by non-field-measuring sensors,

    3. the addition of a curvature-sensing array to correct a third degree of freedom of orientation data obtained by non-field-measuring sensors,

    4. a system of type 3 above wherein the non-field-measuring sensors comprise a curvature-sensing array,

    5. use of field-measuring sensors for direct measurement of two degrees of freedom of a shape deformable in three degrees of freedom when one of the three degrees of freedom is known to be negligibly small.

In various of the above embodiments, the restriction of the range of measurement to those shapes producing variations in output of the sensors is necessitated by a symmetry of many fields, including magnetic and gravitational fields. For instance, the gravity field of the earth can be represented by a vector pointing toward the center of the earth. The magnetic field of the earth can be represented by a vector pointing toward or away from a magnetic pole, usually at some 3D angle with respect to the surface of the earth. If the axis of an acceleration sensor is rotated purely about the gravity field, thus describing a plane or cone with the gravity field vector at its center, there will be no change in the output of the sensor. If it is one of a triad of sensors, there will be change in the output of any of the triad of sensors. A similar argument applies to rotations of magnetic sensors about the magnetic vector. Similar arguments apply to force of water or gas flow impinging on tethered rigid bodies. Angles to the direction of flow may be measured from angle or force measurements of the rigid bodies, but not angles about the direction of flow. Similar arguments apply to measuring angles with respect to non-polarized illumination fields having a preferred direction of emanation.

In various of the above embodiments it is further desirable to include a first set of non-field-measuring sensors to enable measurement of three degrees of freedom of interbody orientation, and use the field-measuring system of the above embodiment to improve the accuracy of at least one degree of freedom of the first set of non-field-measuring sensors when angular rate in at least one degree of freedom minimally affects the field measurement in the at least one degree of freedom, and to include a second set of non-field-measuring sensors, the second set is a curvature-sensing array to improve the accuracy of a degree of freedom of interbody orientation not measured by the field-measuring system, and, the first set comprises angular rate sensors.

Further, it is desirable to provide a system wherein the above first set of non-field-measuring sensors comprise at least one curvature-sensing array, and the second set is not included, wherein said system the data of at least one degree of freedom of the first set is corrected by the said field-measuring sensors when angular rate in the said at least one degree of freedom minimally affects the field measurement in the at least one degree of freedom, and the remaining degrees of freedom of orientation measurement are provided by the curvature-sensing array.

A calibrated structure designed to meet the above constraints of flexibility and range of motion becomes a powerful enabler of measurements with a broad range of applications.

The above method described for accelerometers works also for very slow changes in shape that do not significantly accelerate the sensors compared to the acceleration of gravity.

For more rapid changes, if there are also angular rate sensors installed, the angular rate sensors may be used to calculate the shape, as deviations from the last valid shape sensed by the WCS sensors before rapid changes began. In this case integrated angular rates are used to calculate polyline paths that satisfy the rigid body separation distances.

If the WCS sensors are accelerometers, then acceleration may be obtained directly as a combination of static gravity modulated by the tilt at that instant, and the applied acceleration signal, such as an earthquake vibration or motion of a limb to which the sensors may be attached. In a preferred embodiment, acceleration is calculated as the total signal without temporal filtering, minus the signal with temporal filtering. This acceleration signal is the acceleration measured by the accelerometers in a rigid body, which may be tilted relative to the axis of the vibration field. For instance, in a borehole a given rigid body may be at an angle of 10 degrees from vertical and the vibration may be horizontal. In such a case if the tilt is known, then a correction may be performed to find the horizontal component of the vibration. If a MEMS accelerometer is tilted by an angle theta with respect to vertical, and undergoes an acceleration a, its output is

$$s = gain * g * \sin\theta + gain * a * \cos\theta. \qquad [eq.2]$$

This may be solved to find the acceleration, a, if theta is known from a calculation along the path described by the local sensors.

The common acceleration may be obtained from the reference sensor for the polyline (the first vertex of the polyline). For instance, if a string of sensors is in a borehole, and the top sensor is affixed vertically to the earth at its surface, then it may be used as the reference for the beginning of calculation and may also be used to indicate an overall s-wave acceleration parallel to the surface of the earth. To the extent that the acceleration is uniform at all the sensors, the calculation of dynamic shape will be accurate and no bend or twist (local) sensors will required to perform it. In this preferred embodiment of the invention, cost is reduced by a reduction in the type and numbers of sensors in the calibrated array.

It is also possible to calculate dynamic shape from accelerometer signals using double integration techniques well-known in accelerometer technology. Each dynamic acceleration signal may be integrated once to find velocity and again to find position. However, if the angle of each rigid body in each DOF is not known, then the acceleration will be reduced by the cosine of the angle of the cantilevers relative to vertical, if horizontal acceleration is sought.

An improved dynamic shape measurement may be made by integrating angular rates of the rigid bodies to yield angular positions.

If an array is formed of MEMs acceleration sensors with a wide range of frequency response, the sensors will respond to static acceleration fields like gravity and also to rapidly-changing fields like earthquake vibration. The electronics and software may be arranged to provide output data that represent a long-term average of the total signal (slow data), and other output data that represent only the rapidly-changing components (fast data). The slow data represent the response to gravity and the fast data represent the response to vibration or other rapid movement of the array within the gravity field. The slow data are obtained by averaging many frames of data and otherwise excluding rapidly-changing signals using standard filtering techniques. The fast data are obtained by subtracting the slow data from unfiltered total data. This prior-art technique of obtaining slow and fast data is well-known. If the fast data integrate to zero over time in the filter, then accurate slow data representing the mean shape are obtained. If the mean shape is unchanging or changing only very slowly, then the fast data represent the vibration present at each sensor within the array. Thus, the array may be used to obtain static shape from WCS tilt angles (slow data), while the fast data are used to define the vibration applied to the array at each sensor.

It is possible to have a shape changing rapidly, so that accelerations are due to the movements of elements of the array and to changes in orientation relative to the gravity field (tilt changes) at the same time. There may also be an overall vibration field. In these cases the shape and vibration cannot be separated into separate output data sets based on acceleration alone. In an embodiment of the invention, sensors measuring angular rate are used exclusively at these times of dynamic change to determine the changing shape, which requires a single time integration of angular rate. Signals from both angular rate and WCS angle sensors may be used to determine that a transition from static to dynamic shape has occurred. The last known static shape may be used to initiate the dynamic shape measurement with an optimum starting shape.

If only acceleration sensors are present (no angular rate sensors), then static and dynamic shape will in general be unknown during dynamic shape changes. However, the invention provides valid dynamic shape with only accelerometers in the case where a uniform acceleration field is present, even if the field changes in time. Thus, by uniform acceleration field we mean a spatially uniform acceleration field. An example is a vertical array of sensors in a borehole in a homogeneous bed of rock undergoing spatially uniform horizontal earthquake vibration. In this case all of the tilt sensors will be subjected to the same acceleration from the vibration, and constant acceleration from gravity, so it is possible to extract static shape information from the array during the event.

In borehole sensing for earthquake and slope monitoring, and for many structural monitoring applications, the cantilevers of accelerometers in rigid bodies will usually be approximately vertical and will not move by more than 45 degrees from vertical. In most cases, there is no need for twist measurement, so a preferred embodiment of the invention comprises dual-axis accelerometers in pipes connected by short flexible hoses and an element that reduces or eliminates twist. If twist is not permitted or needed, then the system may be built as a single structure that can be calibrated as a field-installable unit, and rolled up or folded for transport or storage. If twist must be sensed, then either local twist sensors between rigid bodies will be required, or magnetometers must be added.

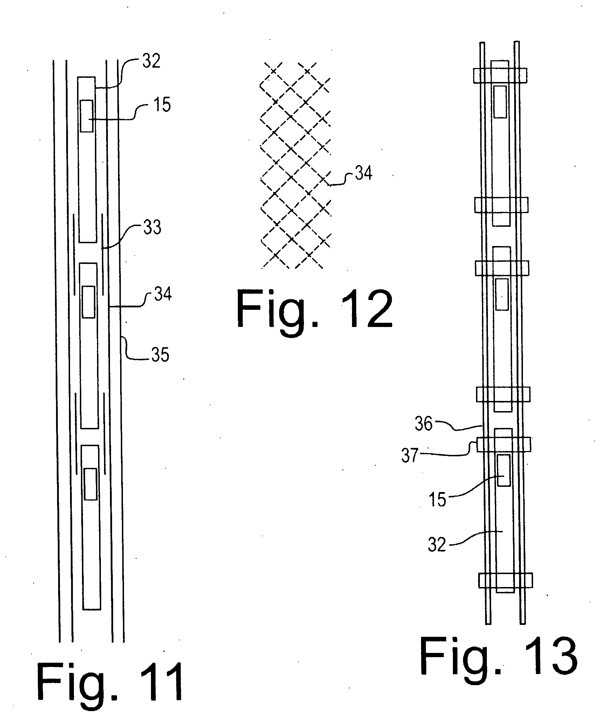

Figure 11 shows a diagram of a preferred embodiment of an array designed to minimize twist and minimize the number and type of sensors. Dual-axis accelerometers 15 are mounted in thin-wall metal pipes 32, forming rigid bodies that include sensing of tilt and acceleration in 2DOF. Pipes with an inside diameter of 12 mm or less are large enough to hold the sensors and associated wiring and circuitry. The pipes are separated end-to-end by a distance sufficient to permit bending, typically to a limit of 45 degrees within their coverings. Typically, the separation is 5-10 mm. The coverings comprise short sections of tight-fitting flexible tubing 33, preferably heat shrinkable tubing with integral adhesive/sealer as a first layer. A second layer 34 of circular metal braid is shown in detail in Figure 12, which provides an overall electrical shield held in contact with the metal tubes by a third layer of flexible tubing 35, which is preferably heat shrinkable tubing. The flexible tubings provide sealing against the elements. Each may be fitted with water-tight end caps (not shown). The metal braid, which is maintained in a nearly cylindrical shape by the coverings, significantly reduces twist at the joints and provides protection against over-bending. The double flexible tubings provide two barriers to moisture penetration. In a preferred embodiment, adhesives are used to attach the braid to the flexible tubings, forming a composite structure that will readily bend but is nearly immune to torsional moments.

In an alternative embodiment shown in Figure 13, the pipes 32 are covered by a flexible hose 36 which is clamped with metal clamps 37 from the outside to each pipe. The flexible hose preferably includes metal or polymer braid to reduce twisting and provide strength. A metal braid may be included inside the hose in contact with the pipes to provide electrical shielding.

The embodiments of Figures 11 and 13 may include angular rate sensors and/or magnetometers.

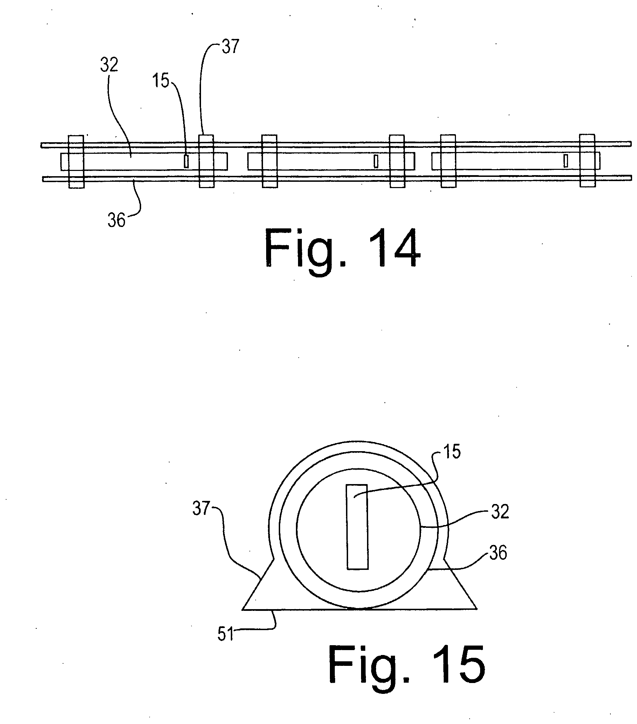

When the array must be horizontal or within approximately 45 degrees of horizontal, another arrangement must be used for static measurements, because the accelerometers in the arrays of Figures 11 and 13 will not measure properly when the pipes are horizontal (the change in signal for a change in angle will be small and of indeterminate sign, and orientation about a vertical axis will be unknown). In this case, shown in Figure 14, the accelerometers 15 should be mounted so their cantilevers are vertical when the pipes 32 are horizontal. Outside fittings may be added to orient the pipes so the accelerometer cantilevers are vertical when the fittings rest on a horizontal surface. This embodiment is shown in Figure 15, where a clamp 37 has been modified to include a horizontal surface 51. In many cases, a sensor of this type may operate within a plane, so need be fitted only with single-axis accelerometers to measure a single DOF of WCS angle of each pipe. Applications for horizontal sensors include monitoring of buildings, and of landfills, slopes, mines, bridges and tunnels. The above clamping system with flat fixturing may be used for vertical arrays also, such as to attach a vertical array to a vertical wall.

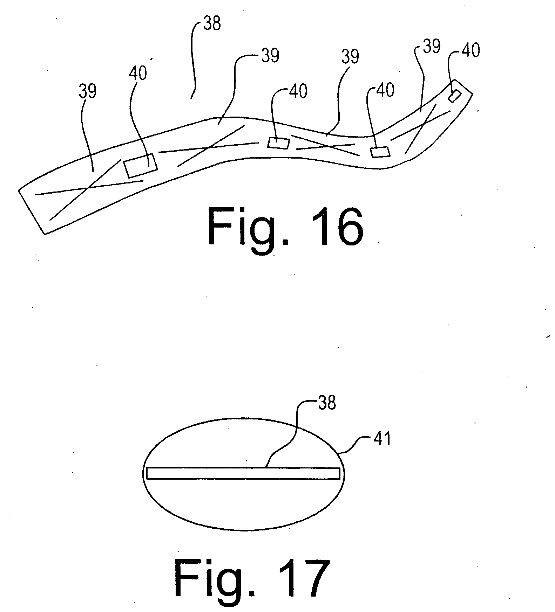

In another embodiment, accelerometers may be attached to a sensory ribbon. Sensory ribbons and ropes are described in Danisch '672 and Danisch '107. The addition of accelerometers to a ribbon 38 is shown in Figure 16. The X-shaped objects 39 represent bend-twist sensor pairs as described in Danisch '672, shown here for completeness, but which are not a subject of this filing. The rectangles 40 represent single, dual, or triaxial accelerometers at known intervals along the flexible substrate, with the possible addition of triaxial angular rate sensors to determine dynamic shape. When the substrate is not moving, the accelerometer signals may be used to calculate WCS orientations with great accuracy. The WCS orientations may be used to "home" the data from the local bend and twist sensors to an initialized state, thereby improving its accuracy when the shape is in motion. Signals from the angular rate sensors, if included, may be used to determine that the shape is indeed static, thereby enabling automatic homing whenever the static condition prevails. The angular rate sensors may also be used to resolve ambiguities of the accelerometers when some of the accelerometers are near poles, upside down, and the like. Magnetometers may be added to resolve rotations about the gravity vector, but in many cases it will not be necessary to add them because accuracy will be improved greatly if only some of the DOFs are "homed".

A ribbon-shaped substrate as described in Danisch '672 may also be used with accelerometers alone (no local bend and twist sensors), to form a vertical or horizontal sensory array. The array will look like Figure 16 without the X-shaped sensor pairs. The accelerometers may be single, dual, or triaxial accelerometers. If the ribbon is vertical and magnetometers or angular rate sensors are not used, it will normally be used to sense planar bend, because twist about the gravity vector cannot be resolved without magnetometers or angular rate sensors. If the ribbon is horizontal, dual axis accelerometers with cantilevers vertical can determine bend and twist from differences in WCS tilts. Mathematics normally used with ribbons with local bend and twist sensors can then be used with the data derived from WCS sensors. As shown in Figure 17, the ribbon 38 may be housed in a hose with oval cross section 41, supported at its edges within the long axis of the oval.

In the above measurement methods using connected rigid bodies, it will be seen that the input to the measurement system comprises orientations of the sensors within defined degrees of freedom determined by the mechanical construction of the connections between rigid bodies. Calculations are applied to the inputs to determine the shape of the array. Shape is the output.

For very deep boreholes, it may be desirable to use an array of length less than the total depth. The array may be lowered into the borehole by a known amount, a measurement may be taken, the array may be further lowered by a known amount, and another measurement may be taken. The process can be repeated, optionally with overlap between the measured portions, until the shape of the entire borehole is sampled. Within the array, torsional alignment is known from a calibration table which may be used automatically by the software. To sense torsional relationship between adjacent measurement stations, magnetometers may be attached to at least one portion of the array to measure absolute orientation within the magnetic field of the earth. The complete shape of the borehole may be calculated by software that concatenates the samples in three dimensions.

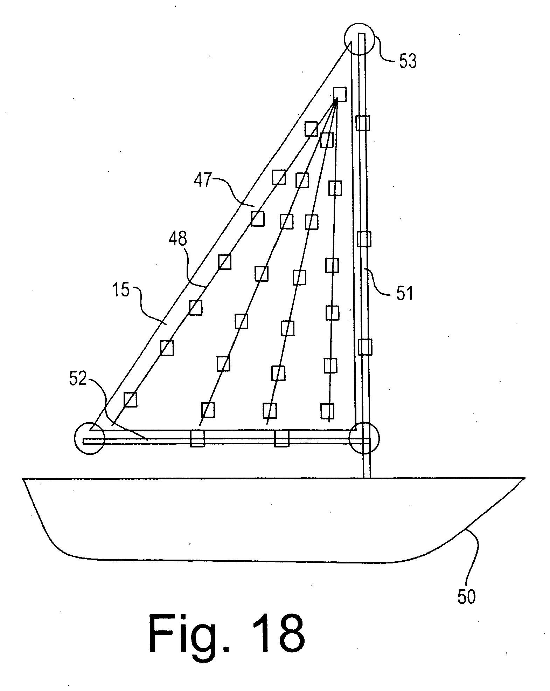

In a sail-measuring application, as shown in Figure 18, accelerometers may be attached to the sail of an aquatic sailing vessel 50 to measure its static and dynamic shape for purposes of measuring and thereby improving sailing performance through control of design or tensioning of sails. In this embodiment, the accelerometers are preferably dual-axis pairs 15, mounted along lines that radiate from the top of a triangular sail 47 to points spaced along the approximately horizontal boom 52 at the bottom of the sail. Other sensors as described in this invention may be added to the mast 51 and boom to resolve their shapes and absolute orientations. For instance, orientation sensors 53 comprised of magnetometers, triaxial accelerometers and angular rate sensors, may be used to reference to the magnetic field, and to and provide an absolute orientation of the mast and boom in two vertical DOFs. Preferably on the sail, and many parts of the mast and boom, cost and weight will be reduced by using accelerometers 15 in preference to magnetic sensors. On the sail, the accelerometers will be used to calculate the static and dynamic shape of each of said lines along the sail. Taken together, the lines 48, which form into 3D curves when the sail is not perfectly taut, describe the 3D shape of the sail. In combination with the orientation sensors, the shape may be placed into absolute 3D coordinates that account for the roll, pitch, and yaw of the vessel. The orientation sensors also resolve poles, which may occur if the vessel is heeled over and some sensors become inverted, and ambiguity due to otherwise unknown magnetic heading.

It is possible to measure sail, mast, and boom shape with field-measuring accelerometers alone, by taking advantage of geometric constraints inherent in a sailing vessel. If a mast is vertical, then accelerometers attached to it will not produce data on rotation about the center line of the mast. Similarly, accelerometers on the boom or sail will provide no data on orientation relative to the vertical center line of the mast. However, when underway, a sailboat's mast will inevitably be non-vertical. Dual- or triple- axis accelerometers mounted at the top and bottom of a non-vertical mast will provide identical readings if the mast is unbent and untwisted. If the non-vertical mast is twisted (for example by sail forces), then the accelerometers will produce different signals from their individual axes that can be used to calculate magnitude and direction of twist. If the mast is also bent in a known plane (for example fore-aft, or port-starboard), the individual axis readings can be used to calculate magnitude of bend and the magnitude and direction of twist.

Since the mast is a flexible substrate, the same principle of calculation applies to multi-axis sensors mounted in groups of two or more on the sail, wherein the sail is the flexible substrate limited to two degrees of freedom (it cannot bend within its plane). Similarly, the boom, which can be modelled as a rigid body attached by a hinge to the mast, is a flexible substrate whose azimuthal angle in the plane of the deck ("yaw") can be calculated from a multi-axis accelerometer on the mast or deck and another on the boom. Equations 1 and 1.1 and associated description show that the calculation does not depend on the angle of the mast relative to the surface of the earth, other than the requirement that it be non-vertical, so the calculation of mast, sail, and boom shape are independent of roll, pitch and yaw of the ship over a broad range of practical applications.

As a practical example of measurement of sail shape, consider dual- or triple-axis accelerometers mounted along a chord of the sail (a near-horizontal line along the sail when it is at rest). In this case the sail is a substrate capable of bending in two degrees of freedom, but not within its plane. Along the chord, these two degrees of freedom can be thought of as bend and twist. Thus, orientations of the sail along a chord, along with the known spacings of the sensors, are inputs to a sensory array used to output the 3D shape of the chord based on the inputs. If more chords above and below the given chord are sensed, then the 3D shape of the sail surface is the output. A necessary condition is that no more degrees of freedom of substrate shape change are permitted than there are degrees of freedom of sensor measurement. (See Equations 1 and 1.1 above for details).

An application similar to that of sail shape measurement is the measurement of chair or auto seat shape, or bed shape. Accelerometers dispersed at known locations over a near-horizontal or near-vertical surface such as a chair seat and chair back may be used to measure the shape of those surfaces. The accelerometers should be arranged to sense the two principle components of the gravity vector. On near-horizontal surfaces tilt is measured. The seat back measurement is like a sail measurement, requiring that the seat back be non-vertical and that deformations are primarily in two degrees of freedom. On non-magnetic surfaces, it is possible to perform similar measurements using magnetometers. The magnetic vector will be non-vertical, so vertical surfaces would be measurable, but geometries requiring measurement about the magnetic vector would have to be avoided.

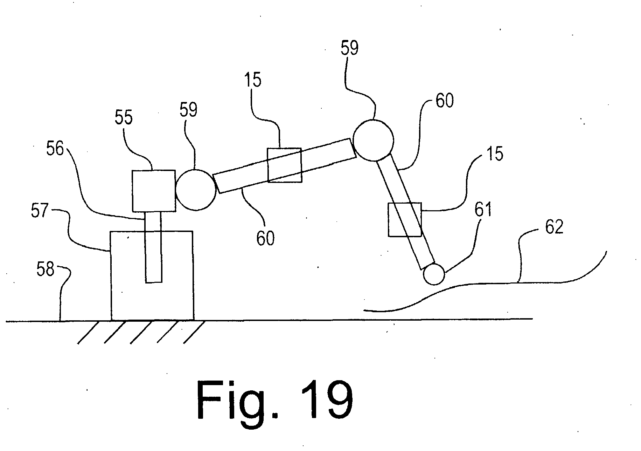

In another example shown in Figure 19, accelerometer pairs 15 are mounted to rigid arms 60. The arms are attached to joints 59 free to rotate only in vertical planes. Only two arms are shown, for simplicity. The arms are attached to a support body 55 attached to a shaft 56 free to rotate in a bearing 57 about a vertical line. The shaft is attached to an angle-measuring sensor (not shown) that measures the angle of the shaft in the horizontal plane. Suitable angle-measuring sensors include potentiometers, shaft encoders, and fiber optic twist or bend sensors. Alternatively, a magnetometer may be used to measure the angle of the shaft in a magnetic field. The bearing is attached to a stationary surface 58, which forms the reference surface for measurements. If the lengths of the arms are known, the tilt angles measured by the accelerometers and the rotation angle of the bearing are sufficient to determine the x, y and z coordinates of an end tool 61, such as a smooth ball or pin, which may be scanned along a surface 62. The data set resulting from the scan can be used to describe the surface in three dimensions. Instead of rotating in only vertical planes, the joints 59 may be modified to allow rotation in two degrees of freedom, so that the readings of the accelerometer pairs combined with the readings of the bearing may be used to describe not only the x, y, and z location of the end tool, but its absolute inclination in 3D space, so that 6 degree of freedom data are available for the end tool. To avoid ambiguity, the arms must not be allowed to pass through a horizontal state, or alternatively, triaxial accelerometers or triaxial angular rate sensors may be used to resolve the ambiguity concerning upward-heading or downward-heading arms. The data may be obtained to great accuracy for static poses of the arms, and to lesser but still useful accuracy when the arms are moving. The system of arms may be used to scan surfaces or to track the position and orientation of a point on a moving body. For instance, the system may be used to measure coordinates of points on a patient in preparation for surgery, or to track the position and orientation of a point on the patient in order to stabilize xray, magnetic resonance, or other medical imagery of the patient's chest or other region while the patient breathes or shifts position. In other applications the system may form part of an endoscope or other probe in order to track the position and orientation of the end of the probe or of parts of the probe.

When the system of Figure 19 is used to track the position and/or orientation of a point, in many cases the movement will comprise small movements about a central point. For example, the breathing patient referred to will make small movements about a central point, so that the joints of the measuring system will move only small distances as modifications to a static pose describing a point on the patient's chest in the middle of the breathing cycle. In these cases, the accelerations due to movement will form a repeating pattern that will be discernable from the static accelerations, thereby allowing a dynamic measurement of shape and position even though the accelerations do not represent an overall common field.

The pipes in arrays like those of Figures 11, 13 and 16 may be calibrated by holding them vertical and measuring their outputs to find the intermediate voltage representing vertical. If temperature sensors are incorporated in some or all of the pipes, then the pipes may be subjected to different temperatures to derive a calibration factor for temperature. The pipes may be rolled on a horizontal surface to find maximum and minimum values of the signals, and each pipe may be marked to indicate x and y axes corresponding to maxima and minima (x and y are arbitrary designations of orthogonal axes describing a polyline in two dimensions. z is used to describe the vertical dimension of a vertical array). After the pipes are assembled into a complete array, the array may be rolled on a horizontal surface until a first accelerometer in a first pipe has a maximum signal. The first pipe is then marked to indicate the x axis. The array is then rolled until a first accelerometer in a second pipe has a maximum output. The x and y outputs of the first pipe are recorded for this condition. This is then repeated for each pipe, until a table of first-pipe x and y values are obtained. These values may then be used to calculate the angular offsets of pipes about their long axes after assembly. The values are used to correct for these offsets by rotating data from x and y tilt sensors in each pipe about its axis using rotational correction equations:

$$sx' = sx * \cos(roll) - sy * \sin(roll); \qquad [\text{eq. } 6]$$

$$sy' = sy * \cos(roll) + sx * \sin(roll); \qquad [\text{eq. } 7]$$

where sx' and sy' are corrected values, sx is the output of the x sensor of a dual axis accelerometer, sy is the output of the y sensor of a dual axis accelerometer, and roll is the angular offset about the long axis of the pipe. The process may be automated by rolling the array at a known rate or measuring its rotational angle during rotation, and measuring the maxima and minima or zero crossings of sensors at known rotational angles. If the array is to be for horizontal use, such as in Figure 14, then the intermediate voltage is found by placing the pipes horizontal on a horizontal surface and rolling them to find maxima and minima, then using an average to find the intermediate values. The roll offsets are found in a manner similar to the vertical arrays.

The torsional misalignment (roll offsets about the long axis of the pipes) between successive sensor locations can also be determined by holding the array in a straight, non-vertical line. Since it can be assumed that practically all of the sensor misalignment between successive nodes is torsional, then the gravitational acceleration vector measured by the $n^{th}$ node is related to the gravitational vector measured by the $n+1^{th}$ sensor location by the matrix equation:

$$\begin{bmatrix} a_{xn} \\ a_{yn} \\ a_{zn} \end{bmatrix} = \begin{bmatrix} \cos(t) & -\sin(t) & 0 \\ \sin(t) & \cos(t) & 0 \\ 0 & 0 & 1 \end{bmatrix} * \begin{bmatrix} a_{xn+1} \\ a_{yn+1} \\ a_{zn+1} \end{bmatrix}$$

where $a_{xn}$, $a_{yn}$, $a_{zn}$ are the accelerations measured by sensors at the nth sensor location, and $a_{xn+1}$, $a_{yn+1}$, $a_{zn+1}$ are the accelerations measured by sensors at the n+1th sensor location, and t is the torsional misalignment of the n+1th sensor location relative to the nth sensor location.

Solving for t gives:

$$t = acos((a_{xn}{*}a_{xn+1} + a_{yn}{*}a_{yn+1}) / (a_{xn+1}^2 + a_{yn+1}^2))$$

or

$$t = - acos((a_{xn}{*}a_{xn+1} + a_{yn}{*}a_{yn+1}) / (a_{xn+1}^2 + a_{yn+1}^2))$$

whichever satisfies the above matrix equation.

The result of the above calibration step and the foregoing construction and calculation methods is a calibrated array that is field-portable, uses the minimum number and type of sensors for a given task, provides acceleration data along known axes, and can be used with minimum fixturing in the field to provide absolute shape data in static and dynamic conditions. The array meets the condition that it allows no more degrees of freedom of movement than are available from the sensors.

Preferred embodiments of the array include those of Figures 11, 13, 14 and 17, wherein the sensors are arranged inside flexible tubing and provide data on a 3D curve beginning at a reference point, usually at one end of the curve such as the top end. A volume of earth, air, or water may be sensed by a array of such arrays. The signals from each array may be collected by microprocessors within or near the array. Arrays within a larger volumetric array may communicate all their data to a central point using wires or by wireless communication.

An additional preferred embodiment comprises angular rate sensors and accelerometers mounted to each of the rigid bodies comprising limbs or body parts of humans or animals. Examples of rigid bodies on humans include the upper arm, the forearm, the back of the hand, and the phalanges of the fingers. The shape of the body may be found by time integration of angular rate to yield orientation from a known starting shape (the "homed" shape). When a portion of the body is not moving, or is moving minimally (with minimal acceleration) as indicated by zero signals from the angular rate sensors, acceleration signals from the accelerometers may be used to determine orientations for some of the degrees of freedom of orientation (those not involving orientation about a vertical line), and therefore to improve the accuracy of the shape measurements. A return of the body to a known "homing" shape allows re-calibration of all the degrees of freedom. This method can be used to create a portable motion capture system that does not rely on magnetic sensing to determine shape or orientation. A single magnetic sensor may be added to orient the body in the WCS. Instead of using angular rate sensors to determine orientations, the above system may use curvature-sensing arrays to measure orientations, with selected DOFs of orientation similarly corrected by accelerometers.

In a related configuration, angular rate sensors and accelerometers may be affixed to all the rigid bodies as described above, and are used to measure joints with only 2 principal DOFs of orientation, like the elbow and knee. More difficult joints like the hip and shoulder, which have 3 DOFs of orientation, may be fitted with curvature-sensing arrays such as the "Topological and Motion Measuring Tool" described earlier in this specification. A single degree of freedom of orientation of the curvature-sensing array may be used to supply or correct the DOF that cannot be corrected by the field-measuring sensors during periods of low angular rate. Correction by a curvature-sensing array can be done at any time, regardless of angular rate. This configuration has the advantage that wherever possible, sensor size and sensor count are minimized, and the effects of errors in the curvature-sensing array are minimized, by relying on it for a minimum subset of the total data. Additional data may be used from the curvature-sensing array, of course, such as to provide displacement data for the shoulder relative to the torso.

As will be readily understood by persons skilled in the art, the present invention also contemplates the use of an output means for the output of the orientation data in various forms. For example, conventional types includes any means for displaying output, such as a monitor or the like, but can also contemplate the use of signal processing software, one or more memory devices, and the like.

**Claims**

1. A shaped system (7-11, 13-14, 16, 18-19), the system comprising:

   an array of two or more rigid bodies (15, 22, 22, 32, 32, 32, 60) at spaced intervals on a flexible substrate (21, 38, 38, 41, 47, 51) within a gravity field (12), adjacent bodies constrained by the flexible structure to two degrees of freedom of bend therebetween and excluding twist therebetween, wherein the flexible structure is oriented to exclude rotation of the rigid bodies about the gravity field vector, and operatively associated with said system relative to combined orientation and spacing values (20, 31);
   an array of gravity field-measuring sensors (3-5, 18, 19, 22, 32, 40, 15) operatively associated with the rigid bodies, the rigid bodies each having at least two gravity field-measuring sensors of the array of gravity field-measuring sensors with nonparallel orientation therebetween (14, 15), adapted to receive input data (11) relating to the absolute orientation of the rigid bodies within said gravity field, said gravity field having a predetermined distribution of field strength;
   means adapted to determine data relative to said two degrees of freedom of the shape characteristics of the system from the input data and generating an output signal defining the two degrees of freedom of the shape characteristics of the system;
   output means adapted to display, transmit or store said output signal.

2. The system of claim 1, wherein the field-measuring sensors (3-5, 18, 19, 22, 32, 40, 15) are accelerometers (3-5, 18, 19, 22, 15, 32, 40) in a gravity field (12) and having no degree of freedom of the interbody orientation about a gravity vector.

3. A shaped system as defined in claim 1, wherein the system includes:
   an array of two or more rigid bodies (15, 22, 22, 32, 32, 32, 60) at spaced intervals on a substrate flexible within a gravity field, and wherein the field-measuring sensors are accelerometers (3-5, 18, 19, 22, 15, 32, 40) with said accelerometers forming an array of accelerometers operatively associated with the substrate and the rigid bodies, the rigid bodies each having at least two accelerometers of the array of accelerometers with constant non-parallel orientation therebetween, adapted to receive input data relating to the absolute orientation of the rigid bodies within said gravity field, said gravity field having a predetermined distribution of field strength and a predetermined distribution of field orientation.

4. The system of claim 1, wherein said substrate (37) is mountable on an object and adapted to measure the shape of the object.

5. The system of claim 1, wherein the system is adapted to be utilized in a field having a predetermined distribution of field strength and wherein the field measuring sensors are responsive to orientation within the field in a number of degrees of freedom no greater than the number of measurable orientations, and within a constraint of the range of measurement to exclude changes in orientation that yield no change in measured signal.

6. The system of claim 3, wherein the accelerometers have no degree of freedom of the interbody orientation about a gravity vector.

7. The system of any one of claims 1 to 6, wherein up to three degrees of freedom of interbody orientation can be determined from a non-field-measuring sensor (18, 19, 23, 39, 55-57).

8. The system of claim 7, wherein the non-field-measuring sensor is an angular rate sensor.

9. The system of any one of claims 1 to 8, wherein the system is subject to twist to an extent predetermined to be minimized (11, 34, 13) within an application.

10. The shaped system of claim 1, wherein said sensors at each location are dual or triple axis accelerometers in a gravity field.

11. The shaped system of claim 10, wherein said field-measuring sensors sense tilt (11) in a world coordinate system and provide vibration (11) acceleration data and constant acceleration of gravity (11) data.

12. The shaped system of claim 1, wherein said accelerometers are mounted in rigid substantially vertical pipes (32) connected at the ends by flexible tubing (33, 36) and said accelerometers provide two degrees of freedom tilt and acceleration data (4, 15) relating movement of the long axes of the pipes relative to a vertical axis.

13. The shaped system of claim 1, wherein said accelerometers are mounted in rigid substantially horizontal pipes (32) connected by flexible tubing (36) and fitted with alignment surfaces (37) for alignment with substantially horizontal surfaces and said accelerometers provide two degrees of freedom tilt and acceleration data relating movement of the substantially horizontal axes of said substantially horizontal pipes relative to a vertical axis.

14. Use of a sensor array of any one of claims 1 to 13, in a field having a predetermined distribution of field strength.

15. The use of claim 14, wherein said gravity-field-measuring sensors provide orientation data for said substrate and define a status or slowly-changing dynamic shape of said substrate from differences in signals within adjacent portions of said substrate.

16. The use of claim 14, wherein the sensor array further comprises non-field-measuring sensors (18, 19, 40, 15) within the flexible substrate within said gravity field, for providing orientation data from said field-measuring sensors when said substrate is not moving, and for providing orientation data from said non-field-measuring sensors when said substrate is moving, wherein the measurements of the non-field-measuring sensors are improved in accuracy when the substrate is not moving, for providing the shape of the substrate at different times.

17. A method for determining the position and orientation of a pair of bodies movable relative to each other, comprising:

providing at least first and second rigid bodies (15, 22, 22, 32, 32, 32, 60) spaced apart from each other by a pre-defined spacing on a flexible substrate (37) and movable in two degrees of freedom therebetween and excluding twist therebetween;
orienting the flexible structure within a gravity field with a predetermined orientation described by at least one gravity field vector;
operating the flexible structure within a range of orientations preventing rotation of any of the rigid bodies about the gravity field vector;
positioning a pair of sensors on each of said first and second bodies, each sensor operatively associated with the other and positioned in a non-parallel orientation relative to the other;
measuring differences in two degrees of freedom of orientation of said bodies within the gravity field having a predetermined distribution of field strength and a predetermined distribution of field orientation;
generating an output signal defining a measured difference in the angles from said first rigid body to said second rigid body; and, displaying, transmitting or storing said measured difference.

18. A method as defined in claim 17, wherein said measuring includes measuring differences in two degrees of freedom of orientation (9, 10) of said bodies within a field having a predetermined distribution of field strength and a predetermined distribution of field orientation.

19. The method of claim 18, wherein each of said rigid bodies has a range of movement excluding rotation about a pre-defined line.

20. The method of claim 17, 18 or 19, wherein said pair of sensors are single, dual, or triple axis accelerometers.

**Patentansprüche**

1. Geformtes System (7-11, 13-14, 16, 18-19), wobei das System umfasst:

eine Anordnung von zwei oder mehr starren Körpern (15, 22, 22, 32, 32, 32, 60) in voneinander beabstandeten Intervallen auf einem flexiblen Substrat (21, 38, 38, 41, 47, 51) innerhalb eines Gravitationsfeldes (12), wobei benachbarte Körper durch die flexible Struktur auf zwei Biegungsfreiheitsgrade zwischen ihnen beschränkt sind und eine Verdrehung zwischen ihnen ausgeschlossen ist, wobei die flexible Struktur so ausgerichtet ist, dass sie eine Rotation der starren Körper um den Gravitätsfeldvektor ausschließt, und sie operativ mit dem besagten System relativ zur kombinierten Ausrichtung und den Abstandswerten (20, 31) verbunden ist;
eine Anordnung von Gravitätsfeld-Messsensoren (3-5, 18, 19, 22, 32, 40, 15), die operativ mit den starren Körpern verbunden sind, wobei die starren Körper jeweils mindestens zwei Gravitätsfeld-Messsensoren der Anordnung von Gravitätsfeld-Messsensoren mit nichtparallel Ausrichtung zwischen ihnen (14, 15) aufweisen, und zwar dazu ausgelegt, Eingabedaten (11) in Bezug auf die absolute Ausrichtung der starren Körper innerhalb des Gravitätsfeldes zu empfangen, wobei das Gravitätsfeld eine vorgegebene Feldstärkeverteilung aufweist;
Mittel, das zur Bestimmung von Daten in Bezug auf die zwei Freiheitsgrade der Formmerkmale des Systems aus den Eingabedaten und zur Erzeugung eines Ausgabesignals, das die zwei Freiheitsgrade der Formmerkmale des Systems definiert, ausgelegt ist;
Ausgabemittel, das zur Anzeige, Übertragung oder Speicherung des Ausgabesignals ausgelegt ist.

2. System nach Anspruch 1, wobei die Feldmesssensoren (3-5, 18, 19, 22, 32, 40, 15) Beschleunigungsmesser (3-5, 18, 19, 22, 15, 32, 40) in einem Gravitätsfeld (12) sind und keinen Freiheitsgrad der Ausrichtung zwischen den Körpern um einen Gravitätsvektor haben.

3. Geformtes System, wie in Anspruch 1 definiert, wobei das System umfasst:
eine Anordnung von zwei oder mehr starren Körpern (15, 22, 22, 32, 32, 32, 60) in beabstandeten Intervallen auf einem innerhalb des Gravitätsfeldes flexiblen Substrats, wobei die Feldmesssensoren Beschleunigungsmesser (3-5, 18, 19, 22, 15, 32, 40) sind, wobei die Beschleunigungsmesser eine Anordnung von Beschleunigungsmessern bilden, die operativ mit dem Substrat und den starren Körpern verbunden sind, wobei die starren Körper jeweils mindestens zwei Beschleunigungsmesser der Anordnung von Beschleunigungsmessern mit konstanter nichtparalleler Ausrichtung zwischen ihnen aufweisen, und zwar ausgelegt zum Empfang von Eingabedaten in Bezug auf die absolute Ausrichtung der starren Körper innerhalb des Gravitätsfeldes, wobei das Gravitätsfeld eine vorgegebene Feldstärkenverteilung und eine vorgegebene Feldausrichtungsverteilung hat.

4. System nach Anspruch 1, wobei das Substrat (37) auf einem Objekt anbringbar ist und zur Messung der Form des Objekts ausgelegt ist.

5. System nach Anspruch 1, wobei das System zur Verwendung in einem Feld ausgelegt ist, das eine vorgegebene Feldstärkenverteilung hat, und wobei die Feldmesssensoren auf Ausrichtung innerhalb des Feldes mit einer Anzahl von Freiheitsgraden, die nicht größer ist als die Zahl der messbaren Ausrichtungen ist, und innerhalb einer Beschränkung des Messbereichs ansprechen, um Ausrichtungsänderungen auszuschließen, die keine Änderung des gemessenen Signals erzeugen.

6. System nach Anspruch 3, wobei die Beschleunigungsmesser keinen Ausrichtungsfreiheitsgrad zwischen Körpern um einen Gravitätsvektor aufweisen.

7. System nach einem der Ansprüche 1 bis 6, wobei bis zu drei Ausrichtungsfreiheitsgrade zwischen Körpern von einem Nicht-Feld-Messsensor (18, 19, 23, 39, 55-57) bestimmt werden können.

8. System nach Anspruch 7, wobei der Nicht-Feld-Messsensor ein Winkelgeschwindigkeitssensor ist.

9. System nach einem der Ansprüche 1 bis 8, wobei das System einer Verdrehung in einem Ausmaß unterliegt, der im Voraus als zu minimierend (11, 34, 13) innerhalb einer Anwendung festgelegt ist.

10. Geformtes System nach Anspruch 1, wobei die besagten Sensoren an jeder Position zwei- oder dreiachsige Beschleunigungsmesser in einem Gravitätsfeld sind.

11. Geformtes System nach Anspruch 10, wobei die Feldmesssensoren eine Neigung (11) in einem Weltkoordinatensystem erfassen und Schwingungs(11)-Beschleunigungsdaten sowie konstante Gravitätsbeschleunigungs(11)-Daten bereitstellen.

12. Geformtes System nach Anspruch 1, wobei die Beschleunigungsmesser in starren, im Wesentlichen vertikalen Rohren (32) montiert sind, die an den Enden durch flexible Schläuche (33, 36) verbunden sind, und die Beschleunigungsmesser zwei Freiheitsgrade für Neigungs- und Beschleunigungsdaten (14, 15) bereitstellen, die Bewegung der Längsachsen der Rohre relativ zu einer vertikalen Achse in Beziehung setzen.

13. Geformtes System nach Anspruch 1, wobei die Beschleunigungsmesser in starren, im Wesentlichen horizontalen Rohren (32) montiert sind, die durch flexible Schläuche (36) verbunden sind und mit Ausrichtungsoberflächen (37) zur Ausrichtung mit im Wesentlichen horizontalen Oberflächen ausgestattet sind, und wobei die Beschleunigungsmesser zwei Freiheitsgrade für Neigungs- und Beschleunigungsdaten bereitstellen, die Bewegung der im Wesentlichen horizontalen Achsen der im Wesentlichen horizontalen Rohre relativ zu einer vertikalen Achse in Beziehung setzen.

14. Verwendung einer Sensoranordnung nach einem der Ansprüche 1 bis 13, in einem Feld mit einer vorgegebenen Feldstärkenverteilung.

15. Verwendung nach Anspruch 14, wobei die Gravitätsfeld-Messsensoren Ausrichtungsdaten für das Substrat bereitstellen und einen Zustand oder eine sich langsam ändernde dynamische Form des Substrats aus Signaldifferenzen innerhalb von benachbarten Teilen des Substrats definieren.

16. Verwendung nach Anspruch 14, wobei die Sensoranordnung weiterhin Nicht-Feld-Messsensoren (18, 19, 40, 15) innerhalb des flexiblen Substrats innerhalb des Gravitätsfeldes aufweist, und zwar zur Bereitstellung von Ausrichtungsdaten von den Feldmesssensoren, wenn sich das Substrat nicht bewegt, sowie zur Bereitstellung von Ausrichtungsdaten von den Nicht-Feld-Messsensoren, wenn sich das Substrat bewegt, wobei die Messungen der Nicht-Feld-Messsensoren eine verbesserte Genauigkeit aufweisen, wenn sich das Substrat nicht bewegt, und zwar zur Bereitstellung der Form des Substrat zu verschiedenen Zeiten.

17. Verfahren zur Bestimmung der Position und Ausrichtung eines Paars von Körpern, die relativ zu einander beweglich sind, umfassend:

Bereitstellen von mindestens ersten und zweiten starren Körpern (15, 22, 22, 32, 32, 32, 60), die voneinander um einen vorgegebenen Abstand auf einem flexiblen Substrat (37) beabstandet sind und mit zwei Freiheitsgraden zwischen ihnen beweglich sind und Verdrehung zwischen ihnen aussschließen;
Ausrichten der flexiblen Struktur innerhalb eines Gravitätsfeldes mit einer vorgegebenen Ausrichtung, die durch mindestens einen Gravitätsfeldvektor beschrieben wird;
Betreiben der flexiblen Struktur innerhalb eines Ausrichtungsbereichs, der eine Rotation eines der starren Körper um den Gravitätsfeldvektor verhindert;
Positionieren eines Paars von Sensoren auf jedem der ersten und zweiten Körper, wobei jeder Sensor operativ mit dem anderen verbunden ist und in einer nichtparallelen Ausrichtung relativ zueinander positioniert ist;
Messen von Differenzen bei zwei Ausrichtungsfreiheitsgraden der Körper innerhalb des Gravitätsfeldes, das eine vorgegebene Feldstärkenverteilung und eine vorgegebene Feldausrichtungsverteilung aufweist;
Erzeugen eines Ausgabesignals, das eine gemessene Differenz der Winkel vom ersten starren Körper zum zweiten starren Körper definiert; und Anzeige, Übertragen oder Speichern der gemessenen Differenz.

18. Verfahren nach Definition in Anspruch 17, wobei die Messung Messdifferenzen in zwei Freiheitsgraden der Ausrichtung (9, 10) der Körper innerhalb eines Feldes mit einer vorgegebenen Feldstärkenverteilung und einer vorgegebenen Feldausrichtungsverteilung umfasst.

19. Verfahren nach Anspruch 18, wobei jeder der starren Körper einen Bewegungsbereich aufweist, der eine Roation um eine vorgegebene Linie ausschließt.

20. Verfahren nach Anspruch 17, 18 oder 19, wobei das Paar der Sensoren ein-, zwei- oder dreiachsige Beschleunigungsmesser sind.

**Revendications**

1. Système mis en forme (7-11, 13-14, 16, 18-19), le système comprenant :

   un réseau d'au moins deux corps rigides (15, 22, 22, 32, 32, 32, 60) à intervalles espacés sur un substrat souple (21, 38, 38, 41, 47, 51) dans un champ gravitationnel (12), des corps adjacents étant contraints par la structure souple à deux degrés de liberté de courbure entre eux et excluant une torsion entre eux, la structure souple étant orientée pour exclure la rotation des corps rigides autour du vecteur de champ gravitationnel, et associés de manière fonctionnelle audit système vis-à-vis de valeurs d'orientation et d'espacement combinées (20, 31) ;
   un réseau de capteurs de mesure de champ gravitationnel (3-5, 18, 19, 22, 32, 40, 15) associés de manière fonctionnelle aux corps rigides, les corps rigides ayant chacun au moins deux capteurs de mesure de champ gravitationnel parmi le réseau de capteurs de mesure de champ gravitationnel avec une orientation non-parallèle entre eux (14, 15), adaptés pour recevoir des données d'entrée (11) relatives à l'orientation absolue des corps rigides dans ledit champ gravitationnel, ledit champ gravitationnel ayant une distribution prédéterminée de l'intensité de champ ;
   des moyens adaptés pour déterminer des données relatives auxdits deux degrés de liberté des caractéristiques de forme du système à partir des données d'entrée, et générer un signal de sortie définissant les deux degrés de liberté des caractéristiques de forme du système ;
   des moyens de sortie adaptés pour afficher, émettre ou stocker ledit signal de sortie.

2. Système selon la revendication 1, dans lequel les capteurs de mesure de champ (3-5, 18, 19, 22, 32, 40, 15) sont des accéléromètres (3-5, 18, 19, 22, 15, 32, 40, dans un champ gravitationnel (12) et ayant aucun degré de liberté de l'orientation inter-corps autour d'un vecteur de gravité.

3. Système mis en forme selon la revendication 1, le système comprenant :

   un réseau d'au moins deux corps rigides (15, 22, 22, 32, 32, 32, 60) à intervalles espacés sur un substrat souple dans un champ gravitationnel, et
   les capteurs de mesure de champ étant des accéléromètres (3-5, 18, 19, 22, 15, 32, 40) avec lesdits accéléromètres formant un réseau d'accéléromètres associés de manière fonctionnelle au substrat et aux corps rigides, les corps rigides ayant chacun au moins deux accéléromètres parmi le réseau d'accéléromètres avec une orientation non-parallèle constante entre eux, adaptés pour recevoir des données d'entrée relatives à l'orientation absolue des corps rigides dans ledit champ gravitationnel, ledit champ gravitationnel ayant une distribution prédéterminée de l'intensité de champ et une distribution prédéterminée de l'orientation de champ.

4. Système selon la revendication 1, dans lequel ledit substrat (37) est apte à être monté sur un objet et adapté pour mesurer la forme de l'objet.

5. Système selon la revendication 1, le système étant adapté pour être utilisé dans un champ ayant une distribution prédéterminée de l'intensité de champ et les capteurs de mesure de champ étant sensibles à une orientation dans le champ dans un nombre de degrés de liberté non supérieur au nombre d'orientations mesurables, et dans les limites d'une contrainte de la plage de mesure pour exclure des changements d'orientation qui ne produisent aucun changement de signal mesuré.

6. Système selon la revendication 3, dans lequel les accéléromètres n'ont aucun degré de liberté de l'orientation inter-corps autour d'un vecteur de gravité.

7. Système selon l'une quelconque des revendication 1 à 6, dans lequel jusqu'à trois degrés de liberté de l'orientation inter-corps peuvent être déterminés à partir d'un capteur de non-mesure de champ (18, 19, 23, 39, 55-57).

8. Système selon la revendication 7, dans lequel le capteur de non-mesure de champ est un capteur de vitesse angulaire.

9. Système selon l'une quelconque des revendications 1 à 8, le système étant soumis à une torsion dans une mesure prédéterminée pour être rendue minimale (11, 34, 13) dans une application.

10. Système mis en forme selon la revendication 1, dans lequel lesdits capteurs à chaque emplacement sont des accéléromètres à deux ou trois axes dans un champ gravitationnel.

**11.** Système mis en forme selon la revendication 10, dans lequel lesdits capteurs de mesure de champ détectent une inclinaison (11) dans un système de coordonnées universel et fournissent des données d'accélération de vibration (11) et des données d'accélération constante de gravité (11).

**12.** Système mis en forme selon la revendication 1, dans lequel lesdits accéléromètres sont montés dans des tuyaux rigides sensiblement verticaux (32) reliés au niveau des extrémités par un tube souple (33, 36), et lesdits accéléromètres fournissent des données d'accélération et d'inclinaison à deux degrés de liberté (4, 15) relatives à un mouvement le long des axes longs des tuyaux par rapport à un axe vertical.

**13.** Système mis en forme selon la revendication 1, dans lequel lesdits accéléromètres sont montés dans des tuyaux rigides sensiblement horizontaux (32) reliés par un tube souple (36) et ajustés avec des surfaces d'alignement (37) pour un alignement avec des surfaces sensiblement horizontales, et lesdits accéléromètres fournissent des données d'accélération et d'inclinaison à deux degrés de liberté relatives à un mouvement des axes sensiblement horizontaux desdits tuyaux sensiblement horizontaux par rapport à un axe vertical.

**14.** Utilisation d'un réseau de capteurs selon l'une quelconque des revendications 1 à 13, dans un champ ayant une distribution prédéterminée de l'intensité de champ.

**15.** Utilisation selon la revendication 14, dans laquelle lesdits capteurs de mesure de champ gravitationnel fournissent des données d'orientation pour ledit substrat et définissent un état ou une forme dynamique à changement lent dudit substrat à partir de différences dans les signaux dans des parties adjacentes dudit substrat.

**16.** Utilisation selon la revendication 14, dans laquelle le réseau de capteurs comprend en outre des capteurs de non-mesure de champ (18, 19, 40, 15) dans le substrat souple dans ledit champ gravitationnel, pour fournir des données d'orientation à partir desdits capteurs de mesure de champ lorsque ledit substrat ne se déplace pas, et pour fournir des données d'orientation à partir desdits capteurs de non-mesure de champ lorsque ledit substrat se déplace, les mesures des capteurs de non-mesure de champ ayant une précision améliorée lorsque le substrat ne se déplace pas, pour fournir la forme du substrat à différents moments.

**17.** Procédé pour déterminer la position et l'orientation d'une paire de corps mobiles l'un par rapport à l'autre, comprenant :

fournir au moins des premier et second corps rigides (15, 22, 22, 32, 32, 32, 60) espacés l'un de l'autre d'un espacement prédéfini sur un substrat souple (37) et mobiles dans deux degrés de liberté entre eux et excluant une torsion entre eux ;
orienter la structure souple dans un champ gravitationnel avec une orientation prédéterminée décrite par au moins un vecteur de champ gravitationnel ;
faire fonctionner la structure souple dans une plage d'orientations empêchant la rotation de l'un quelconque des corps rigides autour du vecteur de champ gravitationnel ;
positionner une paire de capteurs sur chacun desdits premier et second corps, chaque capteur étant associé de manière fonctionnelle à l'autre et positionné dans une orientation non-parallèle par rapport à l'autre ;
mesurer des différences dans deux degrés de liberté d'orientation desdits corps dans le champ gravitationnel ayant une distribution prédéterminée de l'intensité de champ et une distribution prédéterminée de l'orientation de champ ;
générer un signal de sortie définissant une différence mesurée dans les angles entre ledit premier corps rigide et ledit second corps rigide ; et
afficher, émettre ou stocker ladite différence mesurée.

**18.** Procédé selon la revendication 17, dans lequel ladite mesure comprend mesurer des différences dans deux degrés de liberté d'orientation (9, 10) desdits corps dans un champ ayant une distribution prédéterminée de l'intensité de champ et une distribution prédéterminée de l'orientation de champ.

**19.** Procédé selon la revendication 18, dans lequel chacun desdits corps rigides a une plage de mouvement excluant une rotation autour d'une ligne prédéfinie.

**20.** Procédé selon la revendication 17, 18 ou 19, dans lequel ladite paire de capteurs sont des accéléromètres à axe unique, à deux axes ou à trois axes.

Fig. 1

Fig. 2

8

S

7

9

−

10

+

11

12

# Fig. 3

9

7

−

S

+

10

# Fig. 4

14

−  S  +

−

S

+

15

13

# Fig. 5

22

23

Fig. 7

21

23

18

16

20

19

17

Fig. 6

22

23

24

Fig. 8

## Fig. 9

## Fig. 10

Fig. 11

Fig. 12

Fig. 13

26

Fig. 14

Fig. 15

Fig. 16

Fig. 17

Fig. 18

# Fig. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5321257 A, Danisch, L.A.
- US 5633494 A, Danisch, L.A.
- EP 0702780 A, Danisch, L.A.
- US 6127672 A, Danisch, L.A.
- US 6563107 B, Danisch, L.A.
- US 5040154 A
- US 20030222635 A
- US 5097252 A
- US 6184680 B
- US 5307072 A
- US 5170567 A
- US 4258788 A
- US 6095991 A
- US 20040108854 A1
- US 20020012014 A1